# EUROPÄISCHE PATENTSCHRIFT

(11) **EP 1 254 539 B1**
(45) Veröffentlichungstag und Bekanntmachung des Hinweises auf die Patenterteilung: **17.12.2008**
(21) Anmeldenummer: 01921144.0
(22) Anmeldetag: 09.02.2001
(51) Int. Cl.: H04L 12/58, H04M 3/533

(54) **SERVERSYSTEM ZUM BEREITSTELLEN VON INFORMATIONEN FÜR TEILNEHMER IN ZUMINDEST EINEM KOMMUNIKATIONSNETZ**
SERVER SYSTEM FOR PREPARATION OF INFORMATION FOR USERS IN AT LEAST ONE COMMUNICATION NETWORK
SYSTEME SERVEUR PERMETTANT DE METTRE A LA DISPOSITION D'ABONNES DES INFORMATIONS PROPRES A CHAQUE ABONNE, DANS AU MOINS UN RESEAU DE COMMUNICATION

(30) Priorität: 10.02.2000 DE 10005789
(43) Veröffentlichungstag der Anmeldung: 06.11.2002
(73) Patentinhaber: Nokia Siemens Networks GmbH & Co. KG, 81541 München (DE)
(72) Erfinder: BURGARD, Thomas, 80336 München (DE); HOCHHEIM, York, 80469 München (DE); KRETEN, Axel, 82178 Puchheim (DE)
(86) Internationale Anmeldenummer: PCT/DE2001/000504
(87) Internationale Veröffentlichungsnummer: WO 2001/059985

(56) Entgegenhaltungen:
- EP-A- 0 736 989
- EP-A- 0 838 934
- WO-A-98/58332
- US-A- 5 941 946
- MILLER J G ; PARKER M F ; WOO F S : " Accessing messages your way " AT&T TECHNOL. (USA), AT&T TECHNOLOGY, 1. März 1995 (1995-03-01), Seiten 6-9, XP000530274

## Beschreibung

Die vorliegende Erfindung betrifft ein Serversystem und ein Verfahren zum Bereitstellen von Informationen für Teilnehmer in zumindest einem Kommunikationsnetz. Dabei bezieht sich die vorliegende Erfindung insbesondere auf das Bereitstellen von Statusinformationen bezüglich des Status von Mailbox-Nachrichten von mehreren, auch unterschiedlichen, Mailbox-Servern, wobei die Mailbox-Server entweder die Statusinformationen automatisch übertragen oder zur Übertragung der Statusinformationen abgefragt werden.

Die Verwendung von Mailboxen für Sprachinformationen, Faxinformationen, E-Mail-Informationen und dergleichen findet immer breitere Verwendung. In der Regel werden derartige Mailbox-Nachrichten jeweils auf einen Mailbox-Server gespeichert, wobei der betreffende Teilnehmer, für den neu ankommende Mailbox-Nachrichten bestimmt sind, entweder selbständig regelmäßig seine Mailbox-Nachrichten überprüfen und gegebenenfalls abrufen muß, oder der Teilnehmer wird an seinem zugeordneten Telefonapparat, wie z.B. am Handy, am Festapparat zu Hause oder im Büro, mittels einer Statusinformation vom Eintreffen einer oder mehrerer neuer Mailbox-Nachrichten informiert. Nachdem ein Teilnehmer dergestalt von einer neu eingetroffenen Mailbox-Nachricht Kenntnis erhalten hat, kann er sie vom jeweiligen Mailbox-Server abholen und auf seinem Telefonapparat anhören bzw. auf dessen gegebenenfalls vorhandenem Bildschirm anzeigen lassen. Hierzu offenbart der Artikel Miller, Parker, Woo : "Accessing messages your way", USA, AT&T Technology, 1. 3 1995, Seiten 6-9, ein Softwarepaket, das unterschiedliche Mailbox-Server zyklisch abfragt und miteinander synchronisiert.

Beispielsweise liefert das im ETSI-Standard (European Telecommunication Standard Institute) definierte MWI (Message Waiting Indication) Leistungsmerkmal, die Statusinformation, daß eine neue Mailbox-Nachricht vorliegt, nur jeweils von einem getrennten Mailbox-Server (Sprachmail, Faxmail, E-Mail, etc.). Diese Statusinformation wird am Telefonendgerät (analoges Telefon, ISDN-Telefon, Handy oder dergleichen) des betreffenden Teilnehmers angezeigt. Je nach Anzeigemöglichkeit am Telefonendgerät und Signalisierungsmöglichkeit von der zugeordneten Vermittlungsstelle zum Telefonendgerät (analoges Telefon mit zusätzlicher Signalisierung, z.B. mittels Frequency Shift Keying FSK, oder ISDN-Telefon mit funktionalem Protokoll oder Stimulus-Protokoll) kann die Anzeige einfach sein, wie z.B. "Nachricht liegt vor", oder komfortabel, wobei z.B. die Anzahl und Art neu eingegangener Mailbox-Nachrichten, Eingangsdatum und -Uhrzeit und dergleichen angezeigt werden. Es gibt nun Mailbox-Server, die Statusinformationen automatisch zur Verfügung stellen, sobald sich der Status der Mailbox-Nachrichten für einen bestimmten Teilnehmer geändert hat, und Mailbox-Server, die abgefragt werden müssen, um die jeweils aktuellen Statusinformationen zu erhalten.

Nachteilig an dem oben skizzierten System zur Bereitstellung von Statusinformationen bezüglich des Status von Mailbox-Nachrichten ist, daß die Statusinformationen nur an Telefonapparaten bereitgestellt werden. Weiterhin gibt es keine einheitliche Möglichkeit, Gesamt-Status-Informationen bezüglich des Status von Mailbox-Nachrichten mehrerer unterschiedlicher Mailbox-Server bereitzustellen, wenn die Mailbox-Server Mailbox-Nachrichten verschiedener Nachrichtenformate enthalten bzw. auf unterschiedliche Art und Weise durch Abfragen oder durch automatische Bereitstellung die Statusinformationen zur Verfügung stellen.

Die Aufgabe der vorliegenden Erfindung ist somit, ein Serversystem und ein Verfahren zum Bereitstellen von Informationen für Teilnehmer in zumindest einem Kommunikationsnetz bereitzustellen, die auf einfache und einheitliche Weise einem Teilnehmer die Statusinformationen bezüglich des Status der ihn betreffenden Mailbox-Nachrichten von mehreren Mailbox-Servern bereitstellen.

Die obige Aufgabe wird durch ein Serversystem zum Bereitstellen von Informationen für Teilnehmer in zumindest einem Kommunikationsnetz gemäß Anspruch 1 gelöst, das eine Sammeleinrichtung zum Sammeln von Statusinformationen bezüglich des Status von Mailbox-Nachrichten von mehreren Mailbox-Servern, eine Speichereinrichtung mit Mailbox-Server-Informationen, die angeben, welche der Mailbox-Server Statusinformationen automatisch an die Sammel-Einrichtung übertragen und welche der Mailbox-Server von der Sammeleinrichtung zur Übertragung der Statusinformationen abzufragen sind, und eine Übertragungseinrichtung umfaßt, die dem zumindest einem Teilnehmer von der Sammeleinrichtung entsprechend den Mailbox-Server-Informationen erhaltene Statusinformation zuführt, die sich auf Mailbox-Nachrichten beziehen, die für diesen Teilnehmer in den Mailbox-Servern gespeichert sind.

Die obige Aufgabe wird weiterhin durch ein Verfahren zum Bereitstellen von Informationen für Teilnehmer in zumindest einem Kommunikationsnetz gemäß Anspruch 10 gelöst, mit den Schritten Sammeln von Statusinformationen bezüglich des Status von Mailbox-Nachrichten von mehreren Mailbox-Servern auf der Basis von gespeicherten Mailbox-Server-Informationen, die angeben, welche der Mailbox-Server Statusinformationen automatisch übertragen und welche der Mailbox-Server zur Übertragung der Statusinformationen abzufragen sind, und Übertragung von entsprechend den Mailbox-Server-Informationen erhaltenen Statusinformationen an einen Teilnehmer, wobei sich die Mailbox-Server-Informationen auf Mailbox-Nachrichten beziehen, die für diesen Teilnehmer in den Mailbox-Servern gespeichert sind.

Die vorliegende Erfindung ermöglicht somit die einfache und einheitliche Bereitstellung von Statusinformationen bezüglich des Status von Mailbox-Nachrichten von mehreren Mailbox-Servern für einen Teilnehmer, selbst wenn die Mailbox-Server Mailbox-Nachrichten unterschiedlicher Nachrichtenformate enthalten und/oder die Statusnachrichten auf verschiedene Weise bereitstellen.

Vorteilhafterweise erhält die Sammeleinrichtung die Statusinformationen von denjenigen Mailbox-Servern, die die Statusinformationen automatisch übertragen, jeweils bei Änderung des Status der einen jeweiligen Teilnehmer betreffenden Mailbox-Nachrichten automatisch.

Weiter vorteilhaft übermittelt die Sammeleinrichtung den abzufragenden Mailbox-Servern mit einer bestimmten Abfragerate eine Abfragenachricht, um daraufhin die Statusinformationen zu erhalten. Dabei kann die Übertragungseinrichtung die Aktivität der Teilnehmer in dem Kommunikationsnetz überwachen und die Sammeleinrichtung die Abfragerate abhängig von der Aktivität eines jeweiligen Teilnehmers verändern. Beispielsweise ist das Kommunikationsnetz das Internet und die Sammeleinrichtung erhöht die Abfragerate bezüglich eines Teilnehmers, während dieser Teilnehmer im Internet aktiv ist, beispielsweise mittels eines Computers oder dergleichen. In diesem Fall kann die Sammeleinrichtung eine Abfragenachricht an die abzufragenden Mailbox-Server übermitteln, um die Statusinformationen zu aktualisieren, wenn der Teilnehmer online oder offline geht. Hierdurch wird gewährleistet, daß der Teilnehmer jeweils die aktuellsten Statusinformationen über seine Mailboxen erhält.

Das Kommunikationsnetz kann auch ein Telefonnetz sein, wobei die Sammeleinrichtung eine Abfragenachricht an die abzufragenden Mailbox-Server übermittelt, um die Statusinformationen zu aktualisieren, wenn ein jeweiliger Teilnehmer im Telefonnetz aktiv wird, beispielsweise mittels eines Festnetzanschlusses oder eines Handys.

Weiterhin übermittelt die Sammeleinrichtung vorteilhafterweise eine Abfragenachricht an die abzufragenden Mailbox-Server, um die Statusinformationen zu aktualisieren, wenn die Übertragungseinrichtung von einem jeweiligen Teilnehmer eine Nachricht zum Abfragen des Status seiner Mailbox-Nachrichten erhält.

Vorteilhafte Ausgestaltungen des Verfahrens zum Bereitstellen von Informationen für Teilnehmer in einem Kommunikationsnetz gemäß Anspruch 10 sind in den entsprechenden Unteransprüchen definiert.

Das erfindungsgemäße Serversystem und das erfindungsgemäße Verfahren haben den Vorteil, daß Teilnehmer immer eine einheitliche und aktuelle Fassung der Statusinformationen bezüglich des Status aller ihrer Mailbox-Nachrichten der verschiedenen Mailbox-Servern erhalten. Im Falle von Mailbox-Servern, die jede Statusänderung der zugehörigen dem Teilnehmer zugeordneten Mailbox spontan melden, erhält der Teilnehmer immer eine aktuelle Anzeige an seinem jeweiligen Terminal, wie z.B. Computer, Telefon oder dergleichen, wobei Verzögerungen nur durch Netzlaufzeiten und Bearbeitungszeiten in den Servern entstehen. Im Falle von Mailbox-Servern, die den jeweiligen Status der zugehörigen dem entsprechenden Teilnehmer zugeordneten Mailbox nur durch Abfrage seitens der erfindungsgemäßen Sammeleinrichtung melden, erhält der Teilnehmer ebenfalls eine relativ aktuelle Statusinformation, deren Aktualitätsgrad aber verfahrensbedingt etwas geringer und maximal um die Abfragerate verzögert ist.

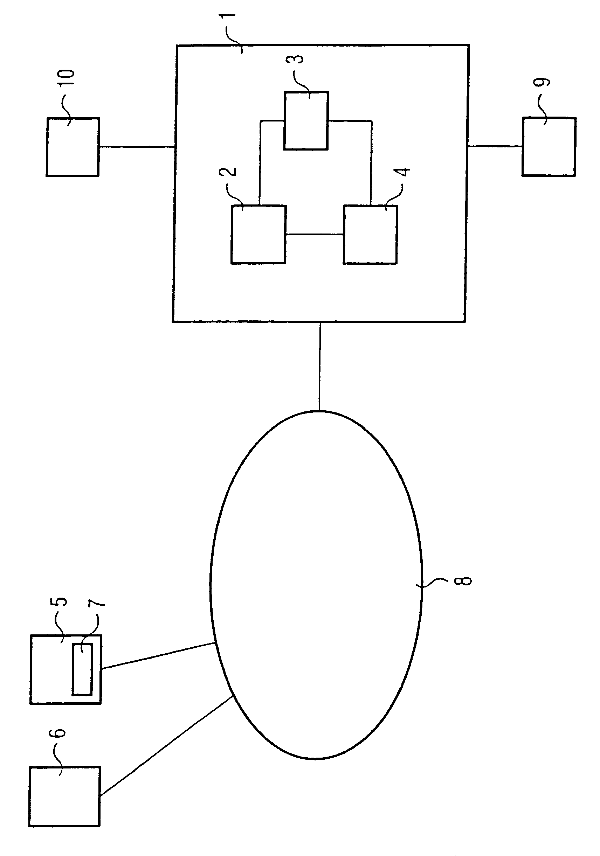

Die vorliegende Erfindung wird in der folgenden Beschreibung anhand eines bevorzugten Ausführungsbeispieles in Bezug auf die einzige Figur 1 näher erläutert, in der schematisch ein erfindungsgemäßes Serversystem und mehrere Mailbox-Server dargestellt sind, die mit dem erfindungsgemäßen Serversystem über das Internet verbunden sind.

Figur 1 zeigt ein Kommunikationssystem, bei dem ein erfindungsgemäßes Serversystem 1 zum Bereitstellen von Informationen für Teilnehmer in einem Kommunikationsnetz beispielsweise in einer einzigen Servereinheit implementiert sind. Das Serversystem 1 umfaßt eine Sammeleinrichtung 2 zum Sammeln von Statusinformationen bezüglich des Status von Mailbox-Nachrichten von mehreren Mailbox-Servern 5, 6. Weiterhin umfaßt das Serversystem 1 eine Speichereinrichtung 3 mit Mailbox-Server-Informationen, die angeben, welche der Mailbox-Server 5 Statusinformationen automatisch an die Sammeleinrichtung 2 übertragen und welche der Mailbox-Server 6 von der Sammeleinrichtung 2 zur Übertragung der Statusinformationen abzufragen sind. Weiterhin umfaßt das Serversystem 1 eine Übertragungseinrichtung 4, die einem Teilnehmer von der Sammeleinrichtung 2 entsprechend den Mailbox-Server-Informationen erhaltene Statusinformationen zuführt, die sich auf Mailbox-Nachrichten beziehen, die für diesen Teilnehmer in den Mailbox-Servern 5, 6 gespeichert sind.

Das Serversystem 1 und die Mailbox-Server 5, 6 sind über das Internet 8 verbunden. Ein Teilnehmer, dem der Status der für ihn in den Mailbox-Servern 5, 6 gespeicherten Mailbox-Nachrichten bereitgestellt werden soll, ist mit dem Serversystem 1 ebenfalls über ein Kommunikationsnetz verbunden, das beispielsweise ebenfalls das Internet oder auch ein Fernsprechnetz oder dergleichen sein kann. Dem Teilnehmer werden die von dem Serversystem 1 bereitgestellten Statusinformationen auf dem jeweiligen Endgerät, wie z.B. einem Handy, Computer, Festnetztelefon oder dergleichen, beispielsweise auf einer Anzeige zur Verfügung gestellt.

Das in der Figur 1 dargestellte Kommunikationssystem zeigt einen ersten Mailbox-Server 5 und einen zweiten Mailbox-Server 6, die die beiden grundsätzlichen Möglichkeiten verdeutlichen, Statusinformationen von Mailbox-Servern über ein Serversystem 1 zur Verfügung zu stellen. Der erste Mailbox-Server 5 sendet die Statusinformationen von sich aus automatisch bei jeder Statusänderung, d.h. beim Eintreffen einer neuen Mailbox-Nachricht und beim Auslesen und Löschen einer vorhandenen Mailbox-Nachricht durch einen Teilnehmer jeweils zum Serversystem 1 (spontane Meldung). Hierzu sind zusätzliche Einrichtungen in dem Mailbox-Server 5 erforderlich, wie z.B. eine Adaptereinrichtung 7, die z.B. als Software in dem Mailbox-Server 5 implementiert sein kann. Die Adaptereinrichtung 7 enthält Informationen, welche Mailboxen, d.h. welche Mailbox-Nachrichten für welche Teilnehmer in Bezug auf Statusänderungen zu überwachen sind und wohin, d.h. zu welchem Endgerät und zu welchem Serversystem 1 die Statusinformationen zu schicken sind. Weiterhin enthält die Adaptereinrichtung 7 eine Überwachungseinrichtung, die spezifisch für den jeweiligen Mailbox-Server 5 ist und vom Betriebssystem des Mailbox-Servers 5 und von der Software des Mailbox-Servers 5 selbst abhängt. Die vom Mailbox-Server 5 an das Serversystem 1 übertragenen Statusinformationen sind unter Berücksichtigung der Verarbeitungszeiten im Mailbox-Server 5 und der Laufzeiten im Kommunikationsnetz 8 prinzipiell aktuell.

Der Mailbox-Server 6 wird periodisch, d.h. mit einer bestimmten Abfragerate, von der Sammeleinrichtung 2 des Serversystems 1 abgefragt und aufgefordert, aktuelle Statusinformationen zu übersenden. Hierbei ist wichtig, daß die Sammeleinrichtung 2 das Abfragen der Statusinformationen ohne eine Statusänderung der betreffenden Mailboxen im Mailbox-Server 6 zuläßt und durchführt. Falls das Kommunikationsnetz 8 das Internet ist, sind hierzu die Internet-Protokolle POP3 und IMAP4 geeignet, die derartige Abfragen ohne Statusänderungen zulassen. Für das periodische Abfragen des Mailbox-Servers 6 sind keine zusätzlichen Einrichtungen im Mailbox-Server 6 erforderlich. Hier besteht jedoch das Problem, daß der an die Sammeleinrichtung 2 übertragene Status nicht aktueller sein kann, als die Abfragerate es zuläßt. Damit der in dem Serversystem 1 vorhandene Status der Mailboxen eines Teilnehmers jeweils aktuell sein soll, so muß der Mailbox-Server 6 in sehr kurzen Zeitabständen, wie z.B. eine Sekunde, abgefragt werden. Derartig kurze Abfragezyklen belasten aber das Kommunikationsnetz 8 und die betreffenden Mailbox-Server. Weiterhin kann das Abfragen protokollbedingt für jeweils einen Mailbox-Server 6 nur sequentiell durchgeführt werden, so daß bei einer großen Anzahl von Mailboxen im Mailbox-Server 6 der Zyklus je Mailbox sehr lang wird. Die Folge ist, daß die im Serversystem 1 vorhandenen Statusinformationen nicht immer aktuell sind und der Teilnehmer keine aktuellen Statusinformationen erhält.

Es ist daher sinnvoll, eine geringe für das Netz verträgliche Abfragerate vorzusehen, wobei der Mailbox-Server bei bestimmten durch die Aktivität eines Teilnehmers gegebenen Anlässen zusätzlich zu der festgelegten Abfragerate durch zusätzliche Statusabfragen abgefragt wird. Fragt beispielsweise ein Teilnehmer seine Mailbox-Zustände gezielt ab, z.B. durch Wahl eines Zugriffscodes für die Abfrage, so werden vor Ausführung dieses Auftrages die Statusinformationen bezüglich des Status von Mailbox-Nachrichten der abzufragenden Mailboxen im Mailbox-Server 6 zusätzlich abgefragt, d.h. die Statusinformationen werden aktualisiert.

Falls der Teilnehmer über einen Computer im Internet aktiv ist, so können die Statusinformationen bezüglich seiner Mailbox-Nachrichten im Mailbox-Server 6 durch zusätzliche Abfragen aktualisiert werden, wenn der Teilnehmer online oder offline geht. Hierbei kann die Abfragerate erhöht werden, während der Teilnehmer im Internet aktiv ist bzw. online ist. Falls der Teilnehmer über ein Telefon in einem Telefonnetz aktiv ist, beispielsweise bei kommendem oder gehendem Verbindungsaufbau, so können die Statusinformationen ebenfalls durch eine zusätzliche Abfrage von der Sammeleinrichtung 2 an den Mailbox-Server 6 aktualisiert werden.

Es ist anzumerken, daß das erfindungsgemäße Serversystem 1 normalerweise Statusinformationen einer größeren Anzahl von Mailbox-Servern sammelt, nicht nur von zwei Mailbox-Servern 5 und 6, wie in Figur 1 dargestellt ist. Die Mailbox-Server können dabei jeweils verschiedene Nachrichtenformate enthalten, wie z.B. Sprachmail, Faxmail, E-Mail usw. Desweiteren können die Mailbox-Server zumindest teilweise in unterschiedlichen Kommunikationsnetzen angeordnet sein - beispielsweise kann ein Sprachmail-Server im Telefonnetz und eine E-Mail-Server im Internet angeordnet sein, wobei der Teilnehmer sowohl im Telefonnetz als auch im Internet angeordnet ist bzw. aktiv ist bzw. erreichbar ist. Das erfindungsgemäße Serversystem ermöglicht daher eine einheitliche Bereitstellung der gesamten Statusinformationen bezüglich der einen Teilnehmer betreffenden Mailboxen in den verschiedenen Mailbox-Servern, wobei die Statusinformationen in jedem Kommunikationsnetz, in welchem der Teilnehmer angeordnet, erreichbar oder aktiv ist, annähernd gleichzeitig bereitgestellt werden.

Die Implementierung dieser Möglichkeit ist in besonders vorteilhafter Weise möglich, wenn das erfindungsgemäße Serversystem 1 an eine digitale Vermittlungsstelle 9 eines Fernsprechnetzes angeschlossen ist, in der gemäß dem ETSI-Standard das MWI-Leistungsmerkmal bereitgestellt ist. Da dieses Leistungsmerkmal gemäß dem ETSI-Standard bereits in dem Fernsprechnetz definiert und bereitgestellt ist, kann damit auf einfache und effiziente Weise die Statusinformation der Mailboxen eines Teilnehmers auch über andere Kommunikationsnetze, wie z.B. dem Internet, bereitgestellt werden. Die Kommunikation zwischen Serversystem 1 und digitaler Vermittlungsstelle 9 erfolgt dabei vorteilhafterweise auf der Basis des im Zeichengabesystem Nr. 7 definierten Transaction Capabilities Application Part (TCAP).

Das erfindungsgemäße Serversystem 1 kann weiterhin mit einer Anwenderprogramm-Schnittstelle 10 für weitere Anwendungen verbunden sein. Die Sammeleinrichtung 2 zum Sammeln der Statusinformationen, die Speichereinrichtung 3 mit der Datenbank, die Informationen enthält, von welchem Mailbox-Server für weichen Teilnehmer der Status durch periodisches Abfragen zu erhalten ist und welche Mailbox-Server bei jeder Statusänderung für welche Teilnehmer die aktuellen Statusinformationen spontan an die Sammeleinrichtung 2 melden, und die Übertragungseinrichtung 4 zum Übertragen der Statusinformationen an einen jeweiligen Teilnehmer und zur Überwachung der Aktivität von Teilnehmern in den Kommunikationsnetzen sind vorteilhafterweise als Software implementiert. Ein Teilnehmer kann beispielsweise über das Internet 8 über einen Computer, und/oder über einen Telefonapparat über ein Fernsprechnetz, das mit der digitalen Vermittlungsstelle 9 mit dem Serversystem 1 verbunden ist, mit den Statusinformationen seiner Mailbox versorgt werden.

Jeder Teilnehmer, der erfindungsgemäß durch das Serversystem 1 seine gesamten Statusinformationen bezüglich aller seiner Mailboxen erhält, hat somit die Gewährleistung, daß die bereitgestellten Statusinformationen immer so aktuell wie möglich sind. Verzögerungen können nur durch Netzlaufzeiten und Bearbeitungszeiten in den Mailbox-Servern bzw. im Serversystem 1 auftreten. Je mehr Mailbox-Server von sich aus spontan die Statusinformationen an das Serversystem 1 senden, wie z.B. der Mailbox-Server 5, desto weniger fällt die Belastung des Kommunikationsnetzes 8 durch das Abfragen der restlichen Mailbox-Server, wie z.B. die Mailbox-Server 6 ins Gewicht, d.h. die Abfragezeiten für diese restlichen Mailbox-Server können gegebenenfalls verringert werden, wodurch die Aktualität der bereitgestellten Statusinformationen weiter erhöht wird.

## Patentansprüche

1. Serversystem (1) zum Bereitstellen von Informationen für Teilnehmer in zumindest einem Kommunikationsnetz, mit einer Sammeleinrichtung (2) zum Sammeln von Statusinformationen bezüglich des Status von Mailbox-Nachrichten von mehreren Mailbox-Servern (5, 6),
**dadurch gekennzeichnet,**
- **daß** eine Speichereinrichtung (3) vorgesehen ist, in welcher Mailbox-Server-Informationen speicherbar sind, die angeben, welche der Mailbox-Server (5) Statusinformationen automatisch an die Sammeleinrichtung (2) übertragen und welche der Mailbox-Server (6) von der Sammeleinrichtung (2) zur Übertragung der Statusinformationen abzufragen sind, und
- **daß** eine Übertragungseinrichtung (4) vorgesehen ist, durch welche von der Sammeleinrichtung (2) die entsprechend den Mailbox-Server-Informationen erhaltenen Statusinformationen dem zumindest einen Teilnehmer zuführt werden, wobei sich die Statusinformationen auf Mailbox-Nachrichten beziehen, die für den zumindest einen Teilnehmer in den Mailbox-Servern (5, 6) gespeichert sind.

2. Serversystem (1) gemäß Anspruch 1,
**dadurch gekennzeichnet,**
**daß** die Sammeleinrichtung (2) die Statusinformationen von denjenigen Mailbox-Servern (5), die die Statusinformationen automatisch übertragen, jeweils bei Änderung des Status der einen jeweiligen Teilnehmer betreffenden Mailbox-Nachrichten automatisch erhält.

3. Serversystem (1) gemäß Anspruch 1 oder 2,
**dadurch gekennzeichnet,**
**daß** die Sammeleinrichtung (2) den abzufragenden Mailbox-Servern (6) mit einer bestimmten Abfragerate eine Abfragenachricht übermittelt, um daraufhin die Statusinformationen zu erhalten.

4. Serversystem (1) gemäß Anspruch 3,
**dadurch gekennzeichnet,**
**daß** die Übertragungseinrichtung (4) die Aktivität der Teilnehmer in zumindest einem des zumindest einen Kommunikationsnetzes überwacht und die Sammeleinrichtung (2) die Abfragerate abhängig von der Aktivität eines jeweiligen Teilnehmers verändert, und/oder zusätzliche Abfragen veranlaßt.

5. Serversystem (1) gemäß Anspruch 3 oder 4,
**dadurch gekennzeichnet,**
**daß** das zumindest eine Kommunikationsnetz das Internet oder ein auf TCP/IP-Protokollen basierendes Kommunikationsnetz oder ein paketorientiertes bzw. zellenorientiertes Kommunikationsnetz ist und die Sammeleinrichtung (2) die Abfragerate bezüglich eines Teilnehmers erhöht, während dieser Teilnehmer im Internet aktiv ist.

6. Serversystem (1) gemäß Anspruch 5,
**dadurch gekennzeichnet,**
**daß** die Sammeleinrichtung (2) eine Abfragenachricht an die abzufragenden Mailbox-Server (6) übermittelt, um die Statusinformationen zu aktualisieren, wenn der Teilnehmer Online oder Offline geht.

7. Serversystem (1) gemäß einem der Ansprüche 4 bis 6,
**dadurch gekennzeichnet,**
**daß** das zumindest eine Kommunikationsnetz ein mobiles oder drahtgebundenes Telefonnetz ist und die Sammeleinrichtung (2) eine Abfragenachricht an die abzufragenden Mailbox-Server (6) übermittelt, um die Statusinformationen zu aktualisieren, wenn ein jeweiliger Teilnehmer in zumindest einem des zumindest einen Kommunikationsnetzes aktiv wird.

8. Serversystem (1) gemäß einem der Ansprüche 4 bis 7,
**dadurch gekennzeichnet,**
**daß** die Sammeleinrichtung (2) eine Abfragenachricht an die abzufragenden Mailbox-Server (6) übermittelt, um die Statusinformationen zu aktualisieren, wenn die Übertragungseinrichtung von einem jeweiligen Teilnehmer eine Nachricht zum Abfragen des Status seiner Mailbox-Nachrichten erhält.

9. Serversystem (1) gemäß einem der Ansprüche 1 bis 8,
**dadurch gekennzeichnet,**
**daß** die Mailbox-Server (6) zumindest teilweise in unterschiedlichen Kommunikationsnetzen angeordnet sind.

10. Verfahren zum Bereitstellen von Informationen für Teilnehmer in zumindest einem Kommunikationsnetz, bei dem Statusinformationen bezüglich des Status von Mailbox-Nachrichten von mehreren Mailbox-Servern gesammelt werden
**dadurch gekennzeichnet,**
- **daß** die Statusinformationen auf der Basis von gespeicherten Mailbox-Server-Informationen, die angeben, welche der Mailbox-Server Statusinformationen automatisch übertragen und welche der Mailbox-Server zur Übertragung der Statusinformationen abzufragen sind, gesammelt werden, und
- **daß** die entsprechend den Mailbox-Server-Informationen erhaltenen Statusinformationen an den zumindest einen Teilnehmer übertragen werden, wobei sich die Statusinformationen auf Mailbox-Nachrichten beziehen, die für diesen Teilnehmer in den Mailbox-Servern gespeichert sind.

11. Verfahren gemäß Anspruch 10,
**dadurch gekennzeichnet,**
**daß** die Statusinformationen von denjenigen Mailbox-Servern, die die Statusinformationen automatisch übertragen, jeweils bei Änderung des Status der einen jeweiligen Teilnehmer betreffenden Mailbox-Nachrichten automatisch übertragen werden.

12. Verfahren gemäß Anspruch 10 oder 11,
**dadurch gekennzeichnet,**
**daß** den abzufragenden Mailbox-Server mit einer bestimmten Abfragerate eine Abfragenachricht übermittelt wird, um daraufhin die Statusinformationen zu erhalten.

13. Verfahren gemäß Anspruch 12,
**dadurch gekennzeichnet,**
**daß** die Aktivität des zumindest einen Teilnehmers in zumindest einem des zumindest einen Kommunikationsnetzes überwacht und die Abfragerate abhängig von der Aktivität eines jeweiligen Teilnehmers verändert wird.

14. Verfahren gemäß Anspruch 12 oder 13,
**dadurch gekennzeichnet,**
**daß** das zumindest eine Kommunikationsnetz das Internet ist oder ein gemäß TCP/IP-Protokollen ausgestaltetes Kommunikationsnetz ist oder als paketorientiertes bzw. zellenorientiertes Kommunikationsnetz ausgestaltet ist und die Abfragerate bezüglich eines Teilnehmers erhöht wird, während dieser Teilnehmer Kommunikationsnetz aktiv ist.

15. Verfahren gemäß Anspruch 14,
**dadurch gekennzeichnet,**
**daß** eine Abfragenachricht an die abzufragenden Mailbox-Server übermittelt wird, um die Statusinformationen zu aktualisieren, wenn der zumindest einen Teilnehmer Online oder Offline geht.

16. Verfahren gemäß einem der Ansprüche 13 bis 15,
**dadurch gekennzeichnet,**
**daß** das zumindest eine Kommunikationsnetz ein mobiles oder drahtgebundenes Fernsprechnetz ist und eine Abfragenachricht an die abzufragenden Mailbox-Server übermittelt wird, um die Statusinformationen zu aktualisieren, wenn ein jeweiliger Teilnehmer im Fernsprechnetz aktiv wird.

17. Verfahren gemäß einem der Ansprüche 13 bis 16,
**dadurch gekennzeichnet,**
**daß** eine Abfragenachricht an die abzufragenden Mailbox-Server übermittelt wird, um die Statusinformationen zu aktualisieren, wenn von einem jeweiligen Teilnehmer eine Nachricht zum Abfragen des Status seiner Mailbox-Nachrichten erhalten wird.

18. Verfahren gemäß einem der Ansprüche 10 bis 17,
**dadurch gekennzeichnet,**
**daß** die Mailbox-Server zumindest teilweise in unterschiedlichen Kommunikationsnetzen angeordnet sind.

## Claims

1. Server system (1) for providing information for subscribers in at least one communications network,
having a collecting device (2) for collecting status information relating to the status of mailbox messages from a number of mailbox servers (5, 6),
**characterized**
- **in that** a memory device (3) is provided in which it is possible to store mailbox server information which indicates which of the mailbox servers (5) have transmitted status information automatically to the collecting device (2) and which of the mailbox servers (6) need to be checked by the collecting device (2) for the transmission of status information, and
- **in that** a transmitting device (4) is provided, by means of which the status information which has been received on the basis of the mailbox server information is supplied from the collecting device (2) to the at least one subscriber, with the status information relating to mailbox messages which are stored for the at least one subscriber in the mailbox servers (5, 6).

2. Server system (1) according to Claim 1,
**characterized**
**in that** the collecting device (2) automatically receives the status information from those mailbox servers (5) which transmit the status information automatically whenever the status of the mailbox messages which relate to a particular subscriber change.

3. Server system (1) according to Claim 1 or 2,
**characterized**
**in that** the collecting device (2) transmits a checking message at a specific checking rate to the mailbox servers (6) which need to be checked, in order then to receive the status information.

4. Server system (1) according to Claim 3,
**characterized**
**in that** the transmitting device (4) monitors the activity of the subscribers in at least one of the at least one communications networks, and the collecting device (2) changes the checking rate, and/or initiates additional checks, as a function of the activity of a particular subscriber.

5. Server system (1) according to Claim 3 or 4,
**characterized**
**in that** the at least one communications network is the Internet, a communications network which is based on TCP/IP protocols, or a packet-oriented or cell-oriented communications network, and the collecting device (2) increases the checking rate for a subscriber while the subscriber is active on the Internet.

6. Server system (1) according to Claim 5,
**characterized**
**in that** the collecting device (2) transmits a checking message to the mailbox servers (6) which need to be checked, in order to update the status information when the subscriber goes online or offline.

7. Server system (1) according to one of Claims 4 to 6,
**characterized**
**in that** the at least one communications network is a mobile or wire-connected telephone network, and the collecting device (2) transmits a checking message to the mailbox servers (6) which need to be checked, in order to update the status information when a particular subscriber is active in at least one of the at least one communications networks.

8. Server system (1) according to one of Claims 4 to 7,
**characterized**
**in that** the collecting device (2) transmits a checking message to the mailbox servers (6) which need to be checked, in order to update the status information when the transmitting device receives from a particular subscriber a message for checking the status of his mailbox messages.

9. Server system (1) according to one of Claims 1 to 8,
**characterized**
**in that** at least some of the mailbox servers (6) are arranged in different communications networks.

10. Method for providing information for subscribers in at least one communications network, in which status information relating to the status of mailbox messages is collected by a number of mailbox servers,
**characterized**
- **in that** the status information is collected on the basis of stored mailbox server information which indicates which of the mailbox servers has automatically transmitted status information and which of the mailbox servers need to be checked for the transmission of status information, and
- **in that** the status information which has been received on the basis of the mailbox server information is transmitted to the at least one subscriber, with the mailbox server information relating to mailbox messages which are stored for this subscriber in the mailbox servers.

11. Method according to Claim 10,
**characterized**
**in that** the status information is transmitted automatically by those mailbox servers which transmit the status information automatically whenever the status of the mailbox messages which relate to a particular subscriber change.

12. Method according to Claim 10 or 11,
**characterized**
**in that** a checking message is transmitted at a specific checking rate to the mailbox servers which need to be checked, in order then to receive the status information.

13. Method according to Claim 12,
**characterized**
**in that** the activity of the at least one subscriber in at least one of the at least one communications networks is monitored, and the checking rate is changed as a function of the activity of a particular subscriber.

14. Method according to Claim 12 or 13,
**characterized**
**in that** the at least one communications network is the Internet or is in the form of a communications network configured in accordance with TCP/IP protocols or in the form of a packet-oriented or cell-oriented communications network, and the checking rate for a subscriber is increased while the subscriber is active in the communications network.

15. Method according to Claim 14,
**characterized**
**in that** a checking message is transmitted to the mailbox servers which need to be checked, in order to update the status information when the at least one subscriber goes online or offline.

16. Method according to one of Claims 13 to 15,
**characterized**
**in that** the at least one communications network is a mobile or wire-connected telephone network, and a checking message is transmitted to the mailbox servers which need to be checked, in order to update the status information when a particular subscriber is active in the telephone network.

17. Method according to one of Claims 13 to 16,
**characterized**
**in that** a checking message is transmitted to the mailbox servers which need to be checked, in order to update the status information when a message for checking the status of his mailbox messages is received from a particular subscriber.

18. Method according to one of Claims 10 to 17,
**characterized**
**in that** at least some of the mailbox servers are arranged in different communications networks.

## Revendications

1. Système serveur (1) pour mettre à disposition des informations pour des abonnés dans au moins un réseau de communication, comprenant un dispositif collecteur (2) pour la collecte d'informations d'état concernant l'état de messages de boîte aux lettres provenant de plusieurs serveurs de boîte aux lettres (5, 6),
**caractérisé en ce que**
- un dispositif de stockage (3) est prévu, dans lequel des informations de serveurs de boîte aux lettres peuvent être stockées, qui indiquent lesquels des serveurs de boîte aux lettres (5) transmettent automatiquement des informations d'état au dispositif collecteur (2) et lesquels des serveurs de boîte aux lettres (6) doivent être interrogés par le dispositif collecteur (2) pour la transmission des informations d'état, et
- **en ce qu'**un dispositif de transmission (4) est prévu, par lequel les informations d'état reçues en fonction des informations de serveur de boîte aux lettres sont amenées par le dispositif collecteur (2) à au moins un abonné, les informations d'état se rapportant à des messages de boîte aux lettres qui sont stockés pour le au moins un abonné dans les serveurs de boîte aux lettres (5, 6).

2. Système serveur (1) selon la revendication 1,
**caractérisé en ce que**
le dispositif collecteur (2) reçoit automatiquement les informations d'état provenant des serveurs de boîte aux lettres (5) qui transmettent automatiquement les informations d'état, à chaque fois en cas de modification de l'état des messages de boîte aux lettres concernant un abonné respectif.

3. Système serveur (1) selon la revendication 1 ou 2,
**caractérisé en ce que**
le dispositif collecteur (2) transmet un message d'interrogation aux serveurs de boîte aux lettres (6) à interroger avec un taux d'interrogation défini afin d'obtenir ensuite les informations d'état.

4. Système serveur (1) selon la revendication 3,
**caractérisé en ce que**
le dispositif de transmission (4) contrôle l'activité des abonnés dans au moins un du au moins un réseau de communication et le dispositif collecteur (2) modifie le taux d'interrogation en fonction de l'activité d'un abonné respectif, et/ou ordonne des interrogations supplémentaires.

5. Système serveur (1) selon la revendication 3 ou 4,
**caractérisé en ce que**
le au moins un réseau de communication est Internet ou un réseau de communication basé sur des protocoles TCP/IP ou un réseau de communication orienté paquet ou orienté cellule et le dispositif collecteur (2) augmente le taux d'interrogation par rapport à un abonné, pendant que cet abonné est actif sur Internet.

6. Système serveur (1) selon la revendication 5,
**caractérisé en ce que**
le dispositif collecteur (2) transmet un message d'interrogation au serveur de boîte aux lettres (6) à interroger, afin d'actualiser les informations d'état lorsque l'abonné est connecté ou déconnecté.

7. Système serveur (1) selon l'une quelconque des revendications 4 à 6,
**caractérisé en ce que**
le au moins un réseau de communication est un réseau téléphonique mobile ou cablé et le dispositif collecteur (2) transmet un message d'interrogation aux serveurs de boîte aux lettres (6) à interroger, afin d'actualiser les informations d'état lorsqu'un abonné respectif est actif dans au moins un du au moins un réseau de communication.

8. Système serveur (1) selon l'une quelconque des revendications 4 à 7,
**caractérisé en ce que**
le dispositif collecteur (2) transmet un message d'interrogation aux serveurs de boîte aux lettres (6) à interroger, afin d'actualiser les informations d'état lorsque le dispositif de transmission reçoit d'un abonné respectif un message pour l'interrogation de l'état de ses messages de boîte aux lettres.

9. Système serveur (1) selon l'une quelconque des revendications 1 à 8,
**caractérisé en ce que**
les serveurs de boîte aux lettres (6) sont disposés au moins en partie dans différents réseaux de communication.

10. Procédé pour la mise à disposition d'informations pour des abonnés dans au moins un réseau de communication, dans lequel des informations d'état concernant l'état de messages de boîte aux lettres provenant de plusieurs serveurs de boîte aux lettres sont collectés,
**caractérisé en ce que**
- les informations d'état sont collectées sur la base d'informations de serveurs de boîte aux lettres stockées, qui indiquent lesquels des serveurs de boîte aux lettres transmettent automatiquement des informations d'état et lesquels des serveurs de boîte aux lettres doivent être interrogés pour la transmission des informations d'état, et
- **en ce que** les informations d'état reçues en fonction des informations de serveurs de boîte aux lettres sont transmises à le au moins un abonné, les informations d'état se rapportant à des messages de boîte aux lettres qui sont stockés pour cet abonné dans les serveurs de boîte aux lettres.

11. Procédé selon la revendication 10,
**caractérisé en ce que**
les informations d'état provenant des serveurs de boîte aux lettres qui transmettent automatiquement les informations d'état sont transmises automatiquement, à chaque fois en cas de modification de l'état des messages de boîte aux lettres concernant un abonné respectif.

12. Procédé selon la revendication 10 ou 11,
**caractérisé en ce que**
un message d'interrogation est transmis aux serveurs de boîte aux lettres à interroger avec un taux d'interrogation, afin d'obtenir ensuite les informations d'état.

13. Procédé selon la revendication 12,
**caractérisé en ce que**
l'activité du au moins un abonné est contrôlée dans au moins un du au moins réseau de communication et le taux d'interrogation est modifié en fonction de l'activité d'un abonné respectif.

14. Procédé selon la revendication 12 ou 13,
**caractérisé en ce que**
le au moins un réseau de communication est Internet ou est un réseau de communication conçu selon des protocoles TCP/IP ou est conçu sous forme de réseau de communication orienté paquet ou orienté cellule et le taux d'interrogation par rapport à un abonné est augmenté, pendant que cet abonné est actif au niveau du réseau de communication.

15. Procédé selon la revendication 14,
**caractérisé en ce que**
un message d'interrogation est transmis aux serveurs de boîte aux lettres à interroger afin d'actualiser les informations d'état lorsque le au moins un abonné est connecté ou déconnecté.

16. Procédé selon l'une quelconque des revendications 13 à 15,
**caractérisé en ce que**
le au moins un réseau de communication est un réseau téléphonique mobile ou cablé et un message d'interrogation est transmis aux serveurs de boîte aux lettres à interroger, afin d'actualiser les informations d'état lorsqu'un abonné respectif devient actif sur le réseau téléphonique.

17. Procédé selon l'une quelconque des revendications 13 à 16,
**caractérisé en ce que**
un message d'interrogation est transmis aux serveurs de boîte aux lettres à interroger, afin d'actualiser les informations d'état lorsqu'un message est reçu d'un abonné respectif pour l'interrogation de l'état de ses messages de boîte aux lettres.

18. Procédé selon l'une quelconque des revendications 10 à 17,
**caractérisé en ce que**
les serveurs de boîte aux lettres sont disposés au moins en partie dans différents réseaux de communication.
